# EUROPEAN PATENT SPECIFICATION

(11) **EP 2 916 069 B1**
(45) Date of publication and mention of the grant of the patent: **20.12.2017**
(21) Application number: 14820692.3
(22) Date of filing: 06.02.2014
(51) Int. Cl.: F22B 37/02, G01B 17/02, G01N 29/04, F22B 37/18, F22B 37/00

(54) **METHOD FOR MEASURING THICKNESS OF BOILER WATER TUBE**
VERFAHREN ZUR MESSUNG DER DICKE EINES KESSELWASSERROHRS
PROCÉDÉ DE MESURE DE L'ÉPAISSEUR D'UN TUBE D'EAU DE CHAUDIÈRE

(30) Priority: 02.07.2013 JP 2013138994
(43) Date of publication of application: 09.09.2015
(73) Proprietor: Mitsubishi Materials Corporation, Chiyoda-ku Tokyo 100-8117 (JP)
(72) Inventor: OGUMA, Nobuhiro, Kagawa-gun Kagawa 761-3110 (JP); HIROSE, Shimpei, Kagawa-gun Kagawa 761-3110 (JP); SYOJI, Kazuya, Kagawa-gun Kagawa 761-3110 (JP); NAKAMURA, Masatoshi, Ichihara-shi Chiba 290-0059 (JP); YASUDA, Yasuo, Tokyo 108-0023 (JP)
(74) Representative: Gille Hrabal
(86) International application number: PCT/JP2014/052746
(87) International publication number: WO 2015/001812

(56) References cited:
- WO-A1-2012/124731
- JP-A- H0 850 118
- JP-A- H06 257 705
- JP-A- H10 238 709
- JP-A- S61 272 602
- JP-A- 2001 083 124
- JP-A- 2003 254 942
- JP-A- 2005 181 139
- JP-A- 2005 338 055
- JP-A- 2009 204 370
- JP-A- 2012 021 631
- JP-A- 2013 117 384
- JP-U- S5 337 982
- JP-Y2- H 045 841

## Description

### Technical Field

The invention relates to a method for measuring a thickness of a boiler water tube(10a) by using insertion-type ultrasonic wave thickness measurement, which is performed, for example, as part of an examination of age deterioration of a boiler water tube (10a).

### Background Art

In the related art, as part of an examination of age deterioration of a boiler water tube having a small diameter, insertion-type ultrasonic wave thickness measurement of the boiler water tube has been performed by using, for example, ultrasonic flaw detecting equipment disclosed in PTL 1. Here, the insertion-type ultrasonic wave thickness measurement of the boiler water tube is performed in the following sequence. First, an inspection hole is provided by cutting a part of the boiler water tube and an ultrasonic flaw detecting probe is inserted in the boiler water tube through the inspection hole. Next, the ultrasonic flaw detecting probe is moved in the boiler water tube while irradiating the inner circumferential surface of the boiler water tube with an ultrasonic wave from the ultrasonic flaw detecting probe at a right angle along a circumferential direction. Accordingly, a thickness distribution along the circumferential direction of the boiler water tube is obtained along a shaft center direction of the boiler water tube.

PTL2 discloses a method for measuring the thickness of a boiler water tube by irradiating an inner circumferential surface of the boiler with an ultrasonic wave from an ultrasonic probe. A guide is formed on an end side of the boiler tube through which the ultrasonic probe is inserted. The ultrasonic probe is moved on the inner side of the boiler water tube while the thickness is being measured. The boiler tube is in a vertical state and the guide pipe is aligned with the axis of the boiler tube. The document does not disclose that the guide pipe is provided on a side surface of the boiler water tube in an angle between 5 and 60 degrees to the boiler water tube and comprises a closing member in the shape of a long bolt member. Further, the document does not disclose a branched guide pipe.

PTL3 discloses the use of an ultrasonic probe through a guide pipe with a long bolt closing member. The guide pipe is provided at an angle approximately 45 degrees to the main tube. The branched pipe is plugged not by the closing member, but by a flowmeter.

### Citation List

### Patent Literature

[PTL 1] Japanese Patent No. 3352653
[PTL2] JP S61 272602
[PTL3] JP 2005 338055 A

### Summary of Invention

### Technical Problem

However, when the inspection hole is formed by cutting the boiler water tube, the boiler water tube is necessarily restored after the thickness measurement. Therefore, when performing the thickness measurement of the boiler water tube, it is necessary to secure a period of time required for incidental work such as cutting the boiler water tube and restoring the boiler water tube. As a result, a problem that the working rate of the boiler is decreased because a work period required for the thickness measurement of the boiler water tube becomes long arises.

An object of the invention is to provide a method for measuring the thickness of a boiler water tube (10a) by the insertion-type ultrasonic wave thickness measurement capable of improving the working rate of the boiler by reducing incidental work accompanying the thickness measurement of the boiler water tube (10a) resulting in a considerable shortening of the work period required for the measurement.

### Problem to be solved by the Invention

According to an aspect of the invention, there is provided a method for measuring the thickness of a boiler water tube (10a) which measures the thickness of a boiler water tube (10a) by irradiating an inner circumferential surface of the boiler water tube (10a) with an ultrasonic wave from an ultrasonic probe (18) while moving the ultrasonic probe (18) inserted into the boiler water tube (10a), the method comprising:
forming an inspection hole (17) on a side surface of the boiler water tube (10a) in a longitudinal direction, and connecting a base side of a guide pipe (16) to the inspection hole (17);
attaching a closing member (24) to the guide pipe (16);
releasing the closing member (24) from the guide pipe (16);
inserting the ultrasonic probe (18) into the boiler water tube (10a) from a tip side of the guide pipe (16), and moving the ultrasonic probe (18) in the boiler water tube (10a) when the thickness of the boiler water tube (10a) is measured;
extracting the ultrasonic probe (18) from the boiler water tube (10a) after measuring the thickness of the boiler water tube (10a); and
attaching the closing member (24) to the tip end of the guide pipe (16) after extracting the ultrasonic probe (18) from the boiler water tube (10a), wherein
the boiler water tube (10a) is oriented vertically, horizontally or in an inclined state, the base side of the guide pipe (16) is connected by being inclined in an angular range of 5 degrees to 60 degrees with respect to an axial center of the boiler water tube (10a),
the closing member (24) is a long bolt member screwed into the guide pipe (16) from the tip end thereof so as to fit with an inner circumference of the guide pipe (16), and
the length of the closing member (24) is set so that a part of a tip of the bolt member (24) attached to the guide pipe (16) is in contact with an edge of the inspection hole (17) on an inner circumferential surface of the boiler water tube (10a), whereby an air pocket is not formed in the base end of the guide pipe (16).

According to the aspect of the invention, in the method for measuring the thickness of a boiler water tube (10a), it is preferable that the boiler water tube (10a) is vertically oriented, the base side of the guide pipe (16) is connected by being inclined upward or downward in an angular range of 5 degrees to 60 degrees with respect to the axial center of the boiler water tube (10a)Accordingly, the ultrasonic probe can be inserted in the boiler water tube (10a) from the upper side.

According to the aspect of the invention, in the method for measuring the thickness of a boiler water tube (10a), it is preferable that the boiler water tube (10a) is oriented vertically, the base side of the guide pipe (16) is connected by being inclined downward in an angular range of 5 degrees to 60 degrees with respect to an axial center of the boiler water tube (10a). The closing member (24) is a long bolt member. Accordingly, the ultrasonic probe (18) can be inserted into the boiler water tube (10a) from the lower side.

According to the aspect of the invention, in the method for measuring the thickness of a boiler water tube (10a), it is preferable that the boiler water tube (10a) is oriented horizontally or in an inclined state. The closing member (24) is a long bolt member, and an air pocket is not formed (that is, an air pocket is prevented from being generated) at the base end of the guide pipe (16) when the bolt member (24) is screwed into the guide pipe (16). Accordingly, the ultrasonic probe (18) can be inserted in the boiler water tube (10a).

According to the aspect of the invention, in the method for measuring the thickness of a boiler water tube (10a), it is preferable that a plurality of the boiler water tubes (10a) are provided, and the guide pipe (16) is provided to all or some of the boiler water tubes (10a) as a managing target.

According to the aspect of the invention, in the method for measuring the thickness of a boiler water tube (10a), it is preferable that the guide pipe (16) has a linear shape.

According to the aspect of the invention, in the method for measuring the thickness of a boiler water tube (10a), it is preferable that an examination of age deterioration of the boiler water tube (10a) is performed by comparing the measured thickness of the boiler water tube (10a) with reference data.

According to the aspect of the invention, in the method for measuring the thickness of a boiler water tube (10a), it is preferable that, when the bolt member (24) is screwed into the guide pipe (16), a length of the bolt member (24) is set so that a part of a tip of the bolt member (24) is in contact with an edge of the inspection hole (17) on an inner circumferential surface side of the boiler water tube (10a).

According to the aspect of the invention, in the method for measuring the thickness of a boiler water tube (10a), it is preferable that the ultrasonic probe (18) is moved up to a target position, in advance, in the boiler water tube (10a), and then the thickness of the boiler water tube (10a) is measured while the ultrasonic probe (18) is pulled back to the inspection hole (17) from the target position.

### Effects of the Invention

According to the aspect of the method for measuring the thickness of a boiler water tube (10a), a guide pipe (16) is provided to a boiler water tube (10a), and usually, the guide pipe (16) is blocked by attaching a closing member (24) to the guide pipe (16), thereby operating the boiler. In addition, when the thickness of the boiler water tube (10a) is measured, the closing member is released from the guide pipe, and the ultrasonic probe can be inserted into the boiler water tube (10a) through the guide pipe (16). Therefore, incidental work such as cutting the boiler water tube and restoring the boiler water tube after the thickness measurement, which is necessary for inserting the ultrasonic probe into the boiler water tube in the related art, can be reduced, and thus a work period required for insertion-type ultrasonic wave thickness measurement of the boiler water tube (10a) can be considerably shortened. Further, since the work period required for the thickness measurement of the boiler water tube (10a) and the boiler restoration can be shortened, it is possible to easily cope with the emergency inspection of the boiler water tube (10a).

In the aspect of the method for measuring the thickness of a boiler water tube (10a), in a case where the boiler water tube (10a) is oriented vertically, since the base side of the guide pipe (16) is connected by being inclined upward in an angular range of 5 degrees to 60 degrees with respect to an axial center of the boiler water tube (10a), the ultrasonic probe (18) can be easily inserted into the boiler water tube (10a) from the upper side of the boiler water tube (10a) through the guide pipe (16), and the ultrasonic probe (18) can be easily taken out to the outside from the boiler water tube (10a) through the guide pipe (16). In addition, since the closing member (24) is a long bolt member and an air pocket is not formed at the base end of the guide pipe (16) when the bolt member is screwed into the guide pipe (16), the operation efficiency of the boiler can be stable.

In the aspect of the method for measuring the thickness of a boiler water tube (10a), in a case where the boiler water tube (10a) is oriented vertically, since the base side of the guide pipe (16) is connected by being inclined downward in an angular range of 5 degrees to 60 degrees with respect to an axial center of the boiler water tube (10a), and since the closing member (24) is a long bolt member, the ultrasonic probe (18) can be easily inserted into the boiler water tube (10a) from the lower side of the boiler water tube (10a) through the guide pipe (16), and the ultrasonic probe (18) can be easily taken out to the outside from the boiler water tube (10a) through the guide pipe (16).

In the aspect of the method for measuring the thickness of a boiler water tube (10a), in a case where the boiler water tube (10a) is oriented horizontally or in an inclined state and since the base side of the guide pipe (16) is connected by being inclined in an angular range of 5 degrees to 60 degrees with respect to an axial center of the boiler water tube (10a), the ultrasonic probe (18) can be easily inserted into the boiler water tube (10a) through guide pipe (16), and the ultrasonic probe (18) can be easily taken out to the outside from the boiler water tube (10a) through the guide pipe (16). In addition, since the closing member (24) is a long bolt member, the bolt member is screwed into the guide pipe, and an air pocket is not formed at the base end of the guide pipe (16), the operation efficiency of the boiler can be stable.

In the aspect of the method for measuring the thickness of a boiler water tube (10a), in a case where a plurality of the boiler water tubes (10a) are provided, and the guide pipe (16) is provided to all of the boiler water tubes (10a), an examination of age deterioration of the boiler water tube (10a) can be performed by measuring the thickness of each of the boiler water tubes (10a). In addition, in a case where the guide pipe (16) is provided to some of the boiler water tubes (10a) as a managing target, the examination of age deterioration of the boiler water tube (10a) can be efficiently performed at low cost. Accordingly, it is possible to determine the effective period for regular inspection of the boiler and to perform efficient maintenance of the boiler water tube (10a).

In the aspect of the method for measuring the thickness of a boiler water tube (10a), in a case where the guide pipe (16) has a linear shape, the attachment of the guide pipe (16) to the boiler water tube (10a) can be easily performed, and inserting and taking out the ultrasonic probe (18) into and from the boiler water tube (10a) can be easily performed.

In the aspect of the method for measuring the thickness of a boiler water tube (10a), in a case where the examination of age deterioration of the boiler water tube (10a) is performed by comparing the measured thickness of the boiler water tube (10a) with reference data, since the thickness of the boiler water tube (10a) can be measured by performing the regular inspection of the boiler without the generation of incidental work, the examination of age deterioration can be easily and efficiently performed.

### Brief Description of Drawings

FIG. 1 is a diagram showing a boiler water tube (10a) to which a method for measuring the thickness of a boiler water tube (10a) according to an embodiment of the invention is applied.
FIG. 2 is a diagram showing the method for measuring the thickness of the boiler water tube (10a).

### Description of Embodiments

For the understanding of the invention, a concrete embodiment of the invention will be described with reference to the accompanying drawings.

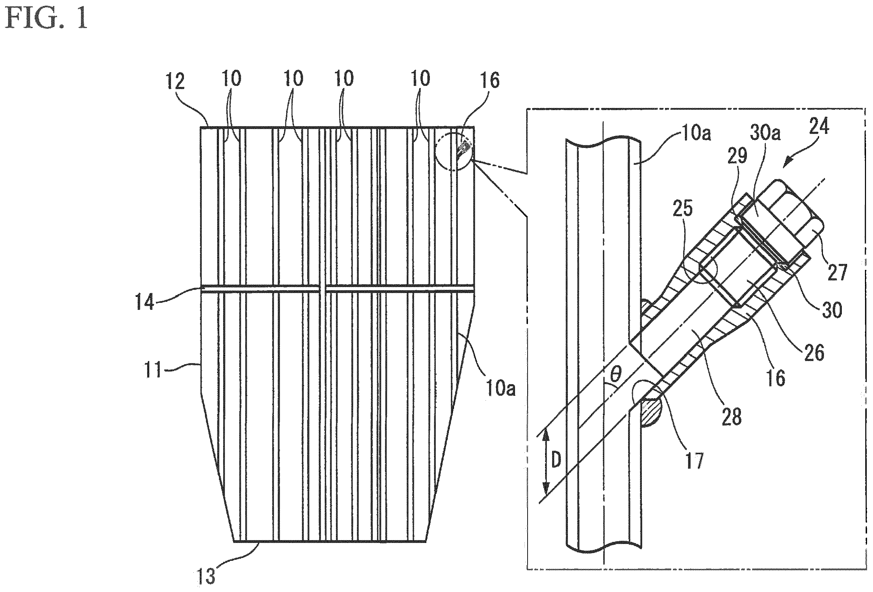

First, description will be given of a boiler water tube (10a) oriented vertically and another boiler water tube (10) oriented vertically (refer to FIG. 1), to which a method for measuring the thickness of a boiler water tube (10a) according to an embodiment of the invention is applied.

A plurality of boiler water tubes (10) and (10a) are arranged in a boiler water tubes panel (11) in a vertical direction with gaps therebetween set in advance, and water passes through the inside of the boiler water tubes (10) and (10a).

An upper end of each of the boiler water tubes (10) and (10a) is suspended on a beam of a building. Therefore, the arrangement of the boiler water tubes (10) and (10a) in the boiler water tubes panel (11) is fixed.

Further, a header (14) communicates with an intermediate portion of each of the boiler water tubes (10) and (10a) in a longitudinal direction. A linear guide pipe (16) is attached to an end in the longitudinal direction of some boiler water tube (10a) (for example, arranged at a specific position in the boiler water tubes panel (11)) set as a managing target in the boiler water tubes (10) and (10a), for example, and to a side surface on the downstream side of an upper end plate (12). The position of the guide pipe (16) is not limited to the end in the longitudinal direction of the boiler water tubes (10) and (10a), and the guide pipe (16) can be attached to any position of the side surface in the longitudinal direction. Hereinafter, the details thereof will be described.

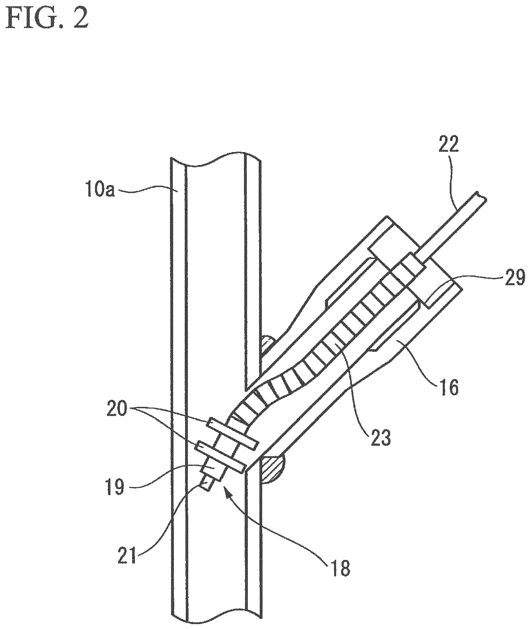

The base side of the guide pipe (16) is fixed, by welding, to an inspection hole (17) that has a long-hole shape and is formed on the side surface of the boiler water tube (10a), by being inclined upward in a range of 5 degrees to 60 degrees with respect to an axial center of the boiler water tube (10a). Here, as shown in FIG 2, a disc-shaped aligning member (20) is attached to an outer circumferential side of an ultrasonic probe (18) that is inserted into the boiler water tube (10a) through the guide pipe (16) when measuring the thickness of the boiler water tube (10a). When the ultrasonic probe (18) is inserted into the boiler water tube (10a), the outer circumferential surface of the aligning member (20) comes in contact with the inner circumferential surface of the boiler water tube (10a), and thereby, the central position of the ultrasonic probe (18) is maintained at the central position of the boiler water tube (10a). Therefore, the inner diameter of the guide pipe (16) is set to have the same dimension as, for example, the inner diameter of the boiler water tube (10a) due to the constraints that the aligning member (20) can pass through the guide pipe (16) and the guide pipe (16) can be easily connected to the boiler water tube (10a) through the inspection hole (17) formed on the boiler water tube (10a).

Since the inclination angle θ of the guide pipe (16) with respect to the boiler water tube (10a) is 5 degrees or more and 60 degrees or less, as shown in FIG. 2, the ultrasonic probe (18) can be easily inserted in the boiler water tube (10a) through the guide pipe (16). Further, in a case where inclination angle θ of the guide pipe (16) with respect to the boiler water tube (10a) is less than 5 degrees, the dimension of a major axis D of the inspection hole (17) formed on the side surface of the boiler water tube (10a) is increased, which is not preferable. Meanwhile, in a case where inclination angle θ of the guide pipe (16) with respect to the boiler water tube (10a) is more than 60 degrees, it is necessary to greatly change the traveling direction of the ultrasonic probe (18) when the ultrasonic probe (18) is inserted into the boiler water tube (10a) from the guide pipe (16), and it is difficult to manipulate the movement of the ultrasonic probe (18) because a plurality of (two in FIG. 2) disc-shaped aligning members (20) (which causes the axial center position of the probe accommodating unit (19) to match the axial center position of the boiler water tube (10a) are attached to the outer circumferential side of a probe accommodating unit (19) of the ultrasonic probe (18), which is not preferable. Further, in some circumstances, there is a problem in that the ultrasonic probe (18) cannot be inserted into the boiler water tube (10a).

Here, reference sign (21) indicates an acoustic mirror unit, and the acoustic mirror unit is rotatably attached to a tip end of the probe accommodating unit (19) so that the rotation central axis thereof matches the axial center position of the probe accommodating unit (19.) The acoustic mirror unit (21) rotates due to water flow passing through the probe accommodating unit (19), and has a function of changing the traveling direction of the ultrasonic wave radiated from a probe accommodated in the probe accommodating unit (19) along the central axis direction of the boiler water tube (10a), to the radially outward direction of the boiler water tube (10a). Reference sign (22) indicates a cable having flexibility, and the cable accommodates a signal cable of the probe and supplies water in the probe accommodating unit (19). Reference sign (23) indicates a flexible metal hose, and the flexible metal hose connects the probe accommodating unit (19) to the cable (22). In this configuration, if the ultrasonic wave is radiated from the probe while the acoustic mirror unit (21) is rotated, the inner circumferential surface of the boiler water tube (10a) can be irradiated with the ultrasonic wave at a right angle along the circumferential direction. Further, a portion of the ultrasonic wave which is reflected by the inner circumferential surface of the boiler water tube (10a), is reflected again by the acoustic mirror unit (21), and is incident on the probe. In addition, the remainder of the ultrasonic wave enters the inside of the boiler water tube (10a), is reflected by the outer circumferential surface of the boiler water tube (10a), passes through the inside of the boiler water tube (10a), is reflected again by the acoustic mirror unit (21), and is incident on the probe.

Accordingly, an inner-circumferential-surface measurement time until the ultrasonic wave radiated from the probe is reflected by the inner circumferential surface of the boiler water tube (10a) and is incident on the probe, and an outer-circumferential-surface measurement time until the ultrasonic wave radiated from the probe is reflected by the outer circumferential surface of the boiler water tube (10a) and is incident on the probe are measured, and a measurement time difference is obtained. Therefore, it is possible to obtain the thickness of the boiler water tube (10a). Here, in the boiler water tube (10a) in a sound state, an inner-circumferential-surface sound time until the ultrasonic wave radiated from the probe is reflected by the inner circumferential surface of the boiler water tube (10a) and is incident on the probe, and an outer-circumferential-surface sound time until the ultrasonic wave radiated from the probe is reflected by the outer circumferential surface of the boiler water tube (10a) and is incident on the probe are measured, and a sound time difference is obtained. Therefore, it is possible for the decrement of the thickness of the boiler water tube (10a) to be calculated based on the difference between the sound time difference and the measurement time difference. In the invention, the sound state of the boiler water tube (10a) means a state in which the thickness of the boiler water tube (10a) is not decreased (is not corroded). Further, in a case where the inner-circumferential-surface measurement time is longer than the inner-circumferential-surface sound time, it can be determined that the thickness on the inner circumferential surface side of the boiler water tube (10a) is decreased (corroded), and in a case where the outer-circumferential-surface sound time is shorter than the outer-circumferential-surface sound time, it can be determined that the thickness on outer circumferential surface side of the boiler water tube (10a) is decreased (corroded).

As shown in FIG. 1, a long bolt member (24) (an example of closing member (24)) is screwed into the guide pipe (16) from the tip side thereof, and thus the opening of the guide pipe (16) is blocked. Here, the bolt member (24) includes a bolt body portion (26) on which a male screw that is screwed into a female screw unit (25) is formed on the inner surface on the tip side of the guide pipe (16); a bolt head portion (27) that is provided to be connected to the base side of the bolt body portion (26); and a cylindrical closing portion (28) that is provided to be connected to the tip side of the bolt body portion (26) and is fitted into a region on the base side closer than the female screw unit (25) in the guide pipe (16). Therefore, at the time of operating the boiler, the amount of bubbles present in water in the boiler water tube (10a) reaches a level that does not cause a problem in the management of the boiler.

Further, a stepped portion (29) that is opened to the outside is formed on the inner periphery of the tip of the guide pipe (16). By inserting the bolt member (24) in the guide pipe (16) and screwing the bolt body portion (26) together with the female screw unit (25) of the guide pipe (16), the bolt member (24) can be gradually moved in the guide pipe (16) toward the boiler water tube (10a), and the movement of the bolt member (24) can be stopped when the lower surface of the bolt head portion (27) comes in contact with the bottom surface of the stepped portion (29) via a ring-shaped sealing member (30) and a ring-shaped washer (30a). Accordingly, in a case where the lower surface of the bolt head portion (27) is in contact with the bottom surface of the stepped portion (29) via a ring-shaped sealing member (30) and a ring-shaped washer (30a), if the length of the closing portion (28) is set in advance so that a part of the tip of the closing portion (28) is in contact with the inner edge of the inspection hole (17) (edge on the inner circumferential surface of the boiler water tube (10a)), when the closing portion (28) is fitted into the guide pipe (16), the highest position of a space portion formed on the base side of the guide pipe (16) can be approximately aligned with the highest position of the inner circumferential surface of the inspection hole (17). Accordingly, at the time of operating the boiler, bubbles present in water in the boiler water tube (10a) are prevented from being collected in the space portion formed on the base side of the guide pipe (16), and thus it is possible to prevent an air pocket from being generated at the time of operating the boiler.

Sequentially, the method for measuring the thickness of the boiler water tube (10a) according to the embodiment of the invention will be described.

As shown in FIG. 1, among the boiler water tubes (10) and (10a) that are long and oriented vertically, a target of the examination for the age deterioration of the thickness of the boiler water tube (10a), that is, the boiler water tube (10a) as a managing target is selected in advance. Next, the inspection hole (17) is formed on the side surface of an end of the boiler water tube (10a) in the longitudinal direction, in FIG. 1, the side surface of the boiler water tube (10a) on the downstream side of the upper end plate (12), and the base side of the guide pipe (16) is connected to the inspection hole (17) by being inclined upward in a range of 5 degrees to 60 degrees with respect to an axial center of the boiler water tube (10a). In addition, usually, that is, at the time of operating the boiler, the bolt member (24) is screwed into the guide pipe (16) from the tip side thereof and the opening of the guide pipe (16) is blocked. Further, in a case where the guide pipe (16) is blocked by the bolt member (24), the ring-shaped sealing member (30) is disposed on the bottom surface of the stepped portion (29) and then the screwing together is performed.

When the measurement of the thickness of the boiler water tube (10a) is performed during the regular inspection of the boiler, the bolt member (24) that blocks the opening of the guide pipe (16) is released from the guide pipe (16) attached to the boiler water tube (10a). Then, water is poured in the boiler water tube (10a) and, as shown in FIG. 2, the ultrasonic probe (18) is inserted into the guide pipe (16) from the tip side of the guide pipe (16). Then, the cable (22) is gradually fed into the guide pipe (16), and therefore, the ultrasonic probe (18) is caused to advance, thereby entering the boiler water tube (10a) by passing through the guide pipe (16).

When the ultrasonic probe (18) is inserted into the boiler water tube (10a), the outer circumferential surface of the aligning member (20) of the ultrasonic probe (18) comes in contact with the inner circumferential surface of the boiler water tube (10a), and thereby, the axial center of the probe accommodating unit (19) is positioned at the axial center position of the boiler water tube (10a). Accordingly, the cable (22) is fed further into the guide pipe (16), and therefore, it is possible to move the ultrasonic probe (18) along the central axis of the boiler water tube (10a). Then, while the acoustic mirror unit (21) is rotated by supplying water into the ultrasonic probe (18) via the cable (22), ultrasonic wave is radiated from the probe, and the cable (22) is fed into the guide pipe (16) at a certain speed. Here, the boiler water tube (10a) is filled with water, and thus when the thickness of the boiler water tube (10a) is measured, water is discharged from the tip portion of the guide pipe (16).

The ultrasonic probe (18) is moved in the boiler water tube (10a) toward a target position on the side of a lower end plate (13) while irradiating the inner circumferential surface of the boiler water tube (10a) with an ultrasonic wave at a right angle along the circumferential direction. Accordingly, the trajectory of irradiated points of an ultrasonic wave radiated from the probe of the ultrasonic probe (18), on the inner circumferential surface of the boiler water tube (10a) is a spiral along the central axis of the boiler water tube (10a). Therefore, the inner-circumferential-surface measurement time and the outer-circumferential-surface measurement time are respectively obtained for the irradiated points positioned on the spiral. Then, the measurement time difference between the outer-circumferential-surface measurement time and the inner-circumferential-surface measurement time is compared with the sound time difference, and it is determined whether or not the thickness of the boiler water tube (10a) is decreased for respective irradiated points. In addition, when the thickness is decreased, based on the magnitude relationship of the inner-circumferential-surface measurement time and the inner-circumferential-surface sound time and the magnitude relationship of the outer-circumferential-surface measurement time and the outer-circumferential-surface sound time, it is determined whether the thickness is decreased on the inner circumferential surface side or the outer circumferential surface side, or on both of the inner and outer circumferential surface sides. Accordingly, it is determined whether the thickness is decreased at each irradiated point, and it is possible to obtain the status of the thickness decrease in the boiler water tube (10a). Further, by comparing reference data (that is, the inner-circumferential-surface sound time, the outer-circumferential-surface sound time, and the sound time difference) with the inner-circumferential-surface measurement time, the outer-circumferential-surface measurement time, and the measurement time difference, the examination of the age deterioration of the boiler water tube (10a) can be performed.

If the ultrasonic probe (18) is moved up to the target position in the boiler water tube (10a) and the insertion-type ultrasonic wave thickness measurement of the boiler water tube (10a) is finished, the irradiation of an ultrasonic wave and the rotation of the acoustic mirror unit (21) are stopped. Next, the cable (22) is gradually pulled out from the guide pipe (16), and the ultrasonic probe (18) is pulled back to the inspection hole (17). Then, the ultrasonic probe (18) is guided in the guide pipe (16), and is taken out to the outside from the tip side of the guide pipe (16). Then, the opening of the guide pipe (16) is blocked by the bolt member (24).

The thickness of the boiler water tube (10a) is measured while the ultrasonic probe (18) is moved up to the target position in the boiler water tube (10a); however, the ultrasonic probe (18) is first moved up to the target position, and then the thickness of the boiler water tube (10a) can be measured while the ultrasonic probe (18) is pulled back to the inspection hole (17).

As described above, the guide pipe (16) is attached to the boiler water tube (10a), and usually, the opening of the guide pipe (16) is blocked by attaching the bolt member (24) to the guide pipe (16). Further, when the thickness of the boiler water tube (10a) is measured, the bolt member (24) is released from the guide pipe (16), and the ultrasonic probe (18) is inserted into the boiler water tube (10a) through the guide pipe (16). Accordingly, incidental work such as cutting the boiler water tube and restoring the boiler water tube after the thickness measurement, which is necessary for inserting the ultrasonic probe 18 into the boiler water tube in the related art, can be reduced, and thus the work period required for the regular inspection can be considerably shortened.

As above, the invention has been described with reference to the embodiment, but the invention is not limited to the configuration described in the above embodiment, and includes other embodiments or modification examples that can be considered to be in the range of matters described in the claims.

Further, components obtained by combining the components of the embodiment and the other embodiments or the modification examples are also included in the invention.

For example, the guide pipe is attached to the boiler water tube (10a) as a managing target, but the guide pipe can be attached to all of the boiler water tubes (10a).

In addition, in the embodiment, the shape of the guide pipe is a linear shape, but only the base part connected to the inspection hole is made to be bent in the range of 5 degrees to 60 degrees with respect to the boiler water tube (10a) and the other part can be made to be linear.

In addition, the base side of the guide pipe is connected to the inspection hole by being inclined upward in the angular range of 5 degrees to 60 degrees with respect to an axial center of the boiler water tube (10a)oriented vertically, and the ultrasonic probe (18) is inserted from the upper side in the boiler water tube (10a) through the guide pipe (16). However, the base side of the guide pipe (16) can be connected to the inspection hole (17) by being inclined downward in the angular range of 5 degrees to 60 degrees with respect to an axial center of the boiler water tube (10a) oriented vertically, and the ultrasonic probe (18) can be inserted from the lower side into the boiler water tube (10a) through the guide pipe (16).

Further, the base side of the guide pipe (16) is connected to the inspection hole (17) by being inclined in the angular range of 5 degrees to 60 degrees with respect toan axial center of the boiler water tube (10a) oriented vertically, and the ultrasonic probe (18) is inserted into the boiler water tube (10a) through the guide pipe (16). However, the base side of the guide pipe (16) can be connected to the inspection hole (17) by being inclined in the angular range of 5 degrees to 60 degrees with respect toan axial center of the boiler water tube (10a) oriented horizontally or in an inclined state, and the ultrasonic probe (18) can be inserted into the boiler water tube (10a) through the guide pipe (16).

### Industrial Applicability

According to the invention, a guide pipe (16) is provided to a boiler water tube (10a), and the guide pipe (16) is blocked by attaching a closing member (24) to the guide pipe (16), thereby operating the boiler. In addition, when the thickness of the boiler water tube (10a) is measured, the closing member (24) is released from the guide pipe (16), and the ultrasonic probe (18) can be inserted into the boiler water tube (10a) through the guide pipe (16). Therefore, incidental work such as cutting the boiler water tube and restoring the boiler water tube after the thickness measurement, which is necessary in the related art, can be reduced, and thus a work period required for insertion-type ultrasonic wave thickness measurement of the boiler water tube (10a) can be considerably shortened. Further, since the work period required for the thickness measurement of the boiler water tube (10a) and the boiler restoration can be shortened, it is possible to easily cope with the emergency inspection of the boiler water tube (10a).

Therefore, the invention is industrially applicable.

### Reference Signs List

10,10a: BOILER WATER TUBE
11: BOILER WATER TUBES PANEL
12: UPPER END PLATE
13: LOWER END PLATE
14: HEADER
16: GUIDE PIPE
17: INSPECTION HOLE
18: ULTRASONIC PROBE
19: PROBE ACCOMMODATING UNIT
20: ALIGNING MEMBER
21: ACOUSTIC MIRROR UNIT
22: CABLE
23: FLEXIBLE METAL HOSE
24: BOLT MEMBER
25: FEMALE SCREW UNIT
26: BOLT BODY PORTION
27: BOLT HEAD PORTION
28: CLOSING PORTION
29: STEPPED PORTION
30: SEALING MEMBER
30a: WASHER

## Claims

1. A method for measuring the thickness of a boiler water tube (10a) which measures the thickness of a boiler water tube (10a) by irradiating an inner circumferential surface of the boiler water tube (10a) with an ultrasonic wave from an ultrasonic probe (18) while moving the ultrasonic probe (18) inserted into the boiler water tube (10a), the method comprising:
forming an inspection hole (17) on a side surface of the boiler water tube (10a) in a longitudinal direction, and connecting a base side of a guide pipe (16) to the inspection hole (17);
attaching a closing member (24) to the guide pipe (16);
releasing the closing member (24) from the guide pipe (16);
inserting the ultrasonic probe (18) into the boiler water tube (10a) from a tip side of the guide pipe (16), and moving the ultrasonic probe (18) in the boiler water tube (10a) when the thickness of the boiler water tube (10a) is measured;
extracting the ultrasonic probe (18) from the boiler water tube (10a) after measuring the thickness of the boiler water tube (10a); and
attaching the closing member (24) to the tip end of the guide pipe (16) after extracting the ultrasonic probe (18) from the boiler water tube (10a), wherein
the boiler water tube (10a) is oriented vertically, horizontally or in an inclined state, the base side of the guide pipe (16) is connected by being inclined in an angular range of 5 degrees to 60 degrees with respect to an axial center of the boiler water tube (10a),
the closing member (24) is a long bolt member screwed into the guide pipe (16) from the tip end thereof so as to fit with an inner circumference of the guide pipe (16), and
the length of the closing member (24) is set so that a part of a tip of the bolt member (24) attached to the guide pipe (16) is in contact with an edge of the inspection hole (17) on an inner circumferential surface of the boiler water tube (10a), whereby an air pocket is not formed in the base end of the guide pipe (16).

2. The method for measuring the thickness of a boiler water tube (10a) according to claim 1, wherein
the boiler water tube (10a) is vertically oriented, and the base side of the guide pipe (16) is connected by being inclined upward or downward in the angular range of 5 degrees to 60 degrees with respect to the axial center of the boiler water tube (10a).

3. The method for measuring the thickness of a boiler water tube (10a) according to claim 1, wherein
the boiler water tube (10a) is oriented horizontally or in the inclined state, and the base side of the guide pipe (16) is connected by being inclined in the angular range of 5 degrees to 60 degrees with respect to the axial center of the boiler water tube (10a).

4. The method for measuring the thickness of a boiler water tube (10a) according to any one of Claims 1 to 3, wherein
a plurality of the boiler water tubes (10a) are provided, and the guide pipe (16) is provided to all or some of the boiler water tubes (10a) as a managing target.

5. The method for measuring the thickness of a boiler water tube (10a) according to any one of Claims 1 to 4, wherein
the guide pipe (16) has a linear shape.

6. The method for measuring the thickness of a boiler water tube (10a) according to any one of Claims 1 to 5, wherein
an examination of age deterioration of the boiler water tube (10a) is performed by comparing the measured thickness of the boiler water tube (10a) with reference data.

7. The method for measuring the thickness of a boiler water tube (10a) according to any one of Claims 1 to 6, wherein
when the bolt member (24) is screwed into the guide pipe (16), a length of the bolt member (24) is set so that a part of a tip of the bolt member (24) is in contact with an edge of the inspection hole (17) on an inner circumferential surface side of the boiler water tube (10a).

8. The method for measuring the thickness of a boiler water tube (10a) according to any one of Claims 1 to 7, wherein the closing member (24) includes:
a bolt body portion (26) having a male screw to be screwed into a female screw part (25) formed in the guide pipe (16);
a bolt head portion (27) provided to be connected to the base end of the bolt body portion (26); and
a cylindrical closing portion (28) provided to be connected to the tip end of the bolt body portion (26) and is fitted into a region in the guide pipe (16) closer to the base end of the guide pipe (16) than the female screw part (25),
wherein a part of a tip of the closing portion (28) fitted into the region is in contact with the edge of the inspection hole (17) on the inner circumferential surface of the boiler water tube (10a), whereby an air pocket is not formed in the base end of the guide pipe (16).

## Patentansprüche

1. Verfahren zum Messen der Dicke eines Kesselwasserrohrs (10a), welches die Dicke eines Kesselwasserrohrs (10a) misst, indem eine Innenumfangsfläche des Kesselwasserrohrs (10a) mit einer Ultraschallwelle von einer Ultraschallsonde (18) bestrahlt wird, während die in das Kesselwasserrohr (10a) eingeführte Ultraschallsonde (18) bewegt wird, wobei das Verfahren umfasst:
Ausbilden eines Inspektionslochs (17) an einer Seitenfläche des Kesselwasserrohrs (10a) in einer Längsrichtung und Verbinden einer Basisseite eines Führungsrohrs (16) mit dem Inspektionsloch (17);
Anbringen eines Verschlusselements (24) an dem Führungsrohr (16);
Lösen des Verschlusselements (24) von dem Führungsrohr (16);
Einführen der Ultraschallsonde (18) in das Kesselwasserrohr (10a) von einer Spitzenseite des Führungsrohrs (16) und Bewegen der Ultraschallsonde (18) in dem Kesselwasserrohr (10a), wenn die Dicke des Kesselwasserrohrs (10a) gemessen wird;
Entfernen der Ultraschallsonde (18) aus dem Kesselwasserrohr (10a) nach Messung der Dicke des Kesselwasserrohrs (10a); und
Anbringen des Verschlusselements (24) an dem Spitzenende des Führungsrohrs (16) nach Entfernen der Ultraschallsonde (18) aus dem Kesselwasserrohr (10a),
worin
das Kesselwasserrohr (10a) vertikal, horizontal oder geneigt ausgerichtet ist, die Basisseite des Führungsrohrs (16) in einem Winkelbereich von 5 Grad bis 60 Grad, bezogen auf ein axiales Zentrum des Kesselwasserrohrs (10a), geneigt verbunden ist,
das Verschlusselement (24) ein langes Bolzenelement ist, welches in das Führungsrohr (16) von dem Spitzenende desselben eingeschraubt ist, so dass es mit dem inneren Durchmesser des Führungsrohrs (16) zusammenpasst, und
die Länge des Verschlusselements (24) so eingestellt ist, dass ein Teil einer Spitze des an dem Führungsrohr (16) angebrachten Bolzenelements (24) mit einer Kante des Inspektionslochs (17) auf einer Innenumfangsfläche des Kesselwasserrohrs (10a) in Kontakt steht, wobei keine Lufttasche am Basisende des Führungsrohrs (16) gebildet wird.

2. Das Verfahren zum Messen der Dicke eines Kesselwasserrohrs (10a) gemäß Anspruch 1, worin
das Kesselwasserrohr (10a) vertikal ausgerichtet ist und die Basisseite des Führungsrohrs (16) in einem Winkelbereich von 5 Grad bis 60 Grad, bezogen auf ein axiales Zentrum des Kesselwasserrohrs (10a), aufwärts oder abwärts geneigt verbunden ist.

3. Das Verfahren zum Messen der Dicke eines Kesselwasserrohrs (10a) gemäß Anspruch 1, worin
das Kesselwasserrohr (10a) horizontal oder geneigt ausgerichtet ist und die Basisseite des Führungsrohrs (16) in einem Winkelbereich von 5 Grad bis 60 Grad, bezogen auf ein axiales Zentrum des Kesselwasserrohrs (10a), geneigt verbunden ist.

4. Das Verfahren zum Messen der Dicke eines Kesselwasserrohrs (10a) gemäß einem der Ansprüche 1 bis 3, worin
mehrere Kesselwasserrohre (10a) vorgesehen sind und das Führungsrohr (16) als Leitungseinheit für alle oder einige der Kesselwasserrohre (10a) vorgesehen ist.

5. Das Verfahren zum Messen der Dicke eines Kesselwasserrohrs (10a) gemäß einem der Ansprüche 1 bis 4, worin
das Führungsrohr (16) eine lineare Form hat.

6. Das Verfahren zum Messen der Dicke eines Kesselwasserrohrs (10a) gemäß einem der Ansprüche 1 bis 5, worin
eine Untersuchung der Altersverschlechterung des Kesselwasserrohrs (10a) durchgeführt wird, indem die gemessene Dicke des Kesselwasserrohrs (10a) mit Referenzdaten verglichen wird.

7. Das Verfahren zum Messen der Dicke eines Kesselwasserrohrs (10a) gemäß einem der Ansprüche 1 bis 6, worin
wenn das Bolzenelement (24) in das Führungsrohr (16) eingeschraubt ist, eine Länge des Verschlusselements (24) eingestellt ist, so dass ein Teil einer Spitze des Bolzenelements (24) mit einer Kante des Inspektionslochs (17) auf einer Innenumfangsfläche des Kesselwasserrohrs (10a) in Kontakt steht.

8. Das Verfahren zum Messen der Dicke eines Kesselwasserrohrs (10a) gemäß einem der Ansprüche 1 bis 7, worin das Verschlusselement (24) umfasst:
einen Bolzenkörperabschnitt (26) mit einem Außengewinde zum Einschrauben in ein Innengewinde (25), welches in dem Führungsrohr (16) ausgebildet ist;
einen Bolzenkopfabschnitt (27), der vorgesehen ist, um mit dem Basisende des Bolzenkörperabschnitts (26) verbunden zu sein; und
einen zylindrischen Schließabschnitt (28), der vorgesehen ist, um mit dem Spitzenende des Bolzenkörperabschnitts (26) verbunden zu sein, und der in einem Bereich des Führungsrohrs (16) eingepasst ist, der näher zu dem Basisende des Führungsrohr (16) liegt als das Innengewinde (25),
wobei der Teil der Spitze des Schließabschnitts (28), der in den Bereich eingepasst ist, mit einer Kante des Inspektionslochs (17) auf einer Innenumfangsfläche des Kesselwasserrohrs (10a) in Kontakt steht, wobei keine Lufttasche am Basisende des Führungsrohrs (16) gebildet wird.

## Revendications

1. Procédé de mesure de l'épaisseur d'un tube d'eau de chaudière (10a) qui mesure l'épaisseur d'un tube d'eau de chaudière (10a) par irradiation d'une surface circonférentielle interne du tube d'eau de chaudière (10a) par une onde ultrasonore provenant d'une sonde ultrasonore (18) tout en déplaçant la sonde ultrasonore (18) insérée dans le tube d'eau de chaudière (10a), le procédé comprenant le fait :
de former un trou de regard (17) sur une surface latérale du tube d'eau de chaudière (10a) dans une direction longitudinale, et de raccorder un côté de base d'un tuyau de guidage (16) au trou de regard (17) ;
de fixer un élément de fermeture (24) au tuyau de guidage (16) ;
de libérer l'élément de fermeture (24) du tuyau de guidage (16) ;
d'insérer la sonde ultrasonore (18) dans le tube d'eau de chaudière (10a) à partir d'un côté de pointe du tuyau de guidage (16), et de déplacer la sonde ultrasonore (18) dans le tube d'eau de chaudière (10a) lorsque l'épaisseur du tube d'eau de chaudière (10a) est mesurée ;
d'extraire la sonde ultrasonore (18) du tube d'eau de chaudière (10a) après avoir mesuré l'épaisseur du tube d'eau de chaudière (10a) ; et
de fixer l'élément de fermeture (24) à l'extrémité de pointe du tuyau de guidage (16) après extraction de la sonde ultrasonore (18) du tube d'eau de chaudière (10a), dans lequel
le tube d'eau de chaudière (10a) est orienté verticalement, horizontalement ou dans un état incliné, le côté de base du tuyau de guidage (16) est raccordé en s'inclinant selon une plage angulaire allant de 5 degrés à 60 degrés par rapport à un centre axial du tube d'eau de chaudière (10a),
l'élément de fermeture (24) est un long élément de boulon vissé dans le tuyau de guidage (16) à partir de son extrémité de pointe de manière à s'ajuster avec une circonférence interne du tuyau de guidage (16), et
la longueur de l'élément de fermeture (24) est réglée de sorte qu'une partie d'une pointe de l'élément de boulon (24) fixé au tuyau de guidage (16) soit en contact avec un bord du trou de regard (17) sur une surface circonférentielle interne du tube d'eau de chaudière (10a), moyennant quoi une poche d'air n'est pas formée dans l'extrémité de base du tuyau de guidage (16).

2. Procédé de mesure de l'épaisseur d'un tube d'eau de chaudière (10a) selon la revendication 1, dans lequel
le tube d'eau de chaudière (10a) est orienté verticalement et le côté de base du tuyau de guidage (16) est raccordé en s'inclinant vers le haut ou vers le bas selon la plage angulaire allant de 5 degrés à 60 degrés par rapport au centre axial du tube d'eau de chaudière (10a).

3. Procédé de mesure de l'épaisseur d'un tube d'eau de chaudière (10a) selon la revendication 1, dans lequel
le tube d'eau de chaudière (10a) est orienté horizontalement ou dans l'état incliné et le côté de base du tuyau de guidage (16) est raccordé en s'inclinant selon la plage angulaire allant de 5 degrés à 60 degrés par rapport au centre axial du tube d'eau de chaudière (10a).

4. Procédé de mesure de l'épaisseur d'un tube d'eau de chaudière (10a) selon l'une quelconque des revendications 1 à 3, dans lequel
une pluralité de tubes d'eau de chaudière (10a) sont prévus, et le tuyau de guidage (16) est prévu sur la totalité ou une partie des tubes d'eau de chaudière (10a) en tant que cible de gestion.

5. Procédé de mesure de l'épaisseur d'un tube d'eau de chaudière (10a) selon l'une quelconque des revendications 1 à 4, dans lequel
le tuyau de guidage (16) a une forme linéaire.

6. Procédé de mesure de l'épaisseur d'un tube d'eau de chaudière (10a) selon l'une quelconque des revendications 1 à 5, dans lequel
un examen de la détérioration due à l'âge du tube d'eau de chaudière (10a) est réalisé en comparant l'épaisseur mesurée du tube d'eau de chaudière (10a) à des données de référence.

7. Procédé de mesure de l'épaisseur d'un tube d'eau de chaudière (10a) selon l'une quelconque des revendications 1 à 6, dans lequel
lorsque l'élément de boulon (24) est vissé dans le tuyau de guidage (16), une longueur de l'élément de boulon (24) est réglée de sorte qu'une partie d'une pointe de l'élément de boulon (24) soit en contact avec un bord du trou de regard (17) sur un côté de surface circonférentielle interne du tube d'eau de chaudière (10a).

8. Procédé de mesure de l'épaisseur d'un tube d'eau de chaudière (10a) selon l'une quelconque des revendications 1 à 7, dans lequel l'élément de fermeture (24) comporte :
une partie de corps de boulon (26) ayant une vis mâle à visser dans une partie de vis femelle (25) formée dans le tuyau de guidage (16) ;
une partie de tête de boulon (27) prévue de manière à être raccordée à l'extrémité de base de la partie de corps de boulon (26) ; et
une partie de fermeture cylindrique (28) prévue de manière à être raccordée à l'extrémité de pointe de la partie de corps de boulon (26) et est ajustée dans une région dans le tuyau de guidage (16) plus proche de l'extrémité de base du tuyau de guidage (16) que la partie de vis femelle (25),
dans lequel une partie d'une pointe de la partie de fermeture (28) ajustée dans la région est en contact avec le bord du trou de regard (17) sur la surface circonférentielle interne du tube d'eau de chaudière (10a), moyennant quoi une poche d'air n'est pas formée dans l'extrémité de base du tuyau de guidage (16).
